# EUROPÄISCHE PATENTSCHRIFT

(11) **EP 3 775 460 B1**
(45) Veröffentlichungstag und Bekanntmachung des Hinweises auf die Patenterteilung: **23.02.2022**
(21) Anmeldenummer: 19709860.1
(22) Anmeldetag: 01.03.2019
(51) Int. Cl.: E05F 15/635, E05F 15/652, F16H 55/26, E05D 15/56

(54) **ANTRIEBSVORRRICHTUNG MIT EINEM ZAHNSTANGENELEMENT FÜR EINEN VERSCHIEBBAREN FLÜGEL ALS SCHIEBEFLÜGEL ODER VERSCHIEBBAREN HEBE-SCHIEBEFLÜGEL EINES FENSTERS ODER EINER TÜR**
DRIVE DEVICE WITH A GEAR RACK ELEMENT FOR A SLIDABLE LEAF IN THE FORM OF A SLIDING LEAF OR A SLIDABLE LIFT-AND-SLIDE LEAF OF A WINDOW OR A DOOR
DISPOSITIF D'ENTRAÎNEMENT COMPRENANT UN ÉLÉMENT DE CRÉMAILLÈRE POUR UN CHÂSSIS MOBILE SOUS FORME DE CHÂSSIS COULISSANT OU DE CHÂSSIS LEVANT-COULISSANT MOBILE D'UNE FENÊTRE OU D'UNE PORTE

(30) Priorität: 27.03.2018 DE 202018001610 U
(43) Veröffentlichungstag der Anmeldung: 17.02.2021
(73) Patentinhaber: SIEGENIA-AUBI KG, 57234 Wilnsdorf (DE)
(72) Erfinder: BERENS, Wolfgang, 54427 Kell am See (DE); KOWALZICK, Holger, 42549 Velbert (DE); PAI-SOLER, Erich, 54411 Hermeskeil (DE); WÖLPER, Hendrik, 58332 Schwelm (DE); ZÖLLER, Martin, 57074 Siegen (DE)
(86) Internationale Anmeldenummer: PCT/EP2019/055086
(87) Internationale Veröffentlichungsnummer: WO 2019/185297

(56) Entgegenhaltungen:
- EP-A1- 0 558 973
- WO-A1-2014/097211
- DE-U1- 9 110 995
- DE-U1-202016 001 381
- US-A- 3 718 052

## Beschreibung

Die Erfindung betrifft eine Antriebsvorrichtung für einen verschiebbaren Flügel als Schiebeflügel oder verschiebbaren Hebe-Schiebeflügel eines Fensters oder einer Tür nach dem Oberbegriff des Anspruchs 1.

Die verschiebbaren Flügel von Systemen als Schiebeflügel oder Hebe-Schiebeflügel für ein Fenster oder eine Tür weisen häufig eine relativ hohe Masse auf. Beim Verschieben des Flügels, insbesondere beim Anschieben aus einer Standposition des Flügels muss zum Öffnen eine hohe Kraft aufgenommen werden. Auch das Schließen erfordert ein Aufbringen eines Widerstandes gegen die Gewichtskraft des Flügels. Bekannte Antriebe sind sichtbar auf dem Fenster oder der Tür montiert und werden mit einer zusätzlichen Abdeckung abgeschirmt, was die Optik stark beeinträchtigt. Ebenso wird das Verletzungsrisiko bei der Montage durch störend aufliegend sichtbare Bauteile erhöht. Ferner bieten sichtbare Bauteile mehr Möglichkeiten einer Manipulation von außen. Eine Montage einer solchen Antriebsvorrichtung erweist sich aus dem bekannten Stand der Technik ebenso als aufwendig.

Des Weiteren sind verdeckt liegend angeordnete Antriebe bekannt, die sich jedoch nur mit hohen Aufwand und in nur wenig geeignete Profilsysteme integrieren lassen. Insbesondere erweist sich der Fräsaufwand im Profil als sehr hoch und kann zu hohen Kosten und zur Schwächung der Struktur der Fenster- oder Türelemente führen.

Aus der EP 2 063 058 B1 ist ein Schiebefenster oder eine Schiebetür mit einem Blendrahmen bekannt geworden, in dem mindestens ein Schiebeflügel verfahrbar gehalten ist, der über einen Antrieb bewegbar und über Verriegelungsmittel mit dem Blendrahmen koppelbar ist, wobei der Schiebeflügel vier aneinander festgelegte Rahmenprofile aufweist. Dabei umfasst der Antrieb eine angetriebene Antriebsrolle, um die ein am Blendrahmen festgelegtes Spannelement gewickelt ist, wobei das Spannelement über zwei Umlenkrollen geführt ist und in eine Hohlkammer des Rahmenprofils einläuft.

Die vorliegende Steuervorrichtung ist zur Führungsschiene aufgrund des vertikalen Einbaus in einem vertikalen Holm des Flügels nur über eine Umlenkung zur Führungsschiene erreichbar, was den Aufbau kostenaufwendig verkompliziert und entsprechend viel Bauraum im Flügel benötigt. Außerdem sind die Bauteile der Steuervorrichtung von der Führungsschiene weit voneinander beabstandet verteilt, was eine Montage aufgrund einzelner Bauteilekomponenten erschwert.

Weiter wird verwiesen auf die EP 1 914 372 A2. Dabei ist eine als Schiebetür oder Schwenkschiebetür ausgebildete Fahrgasttür für Fahrzeuge des öffentlichen Personenverkehrs mit mindestens einem in seiner Längsrichtung verschiebbaren Türblatt vorgesehen, das in einer Tragführung aufgehängt und verschiebbar geführt ist. Die Tragführung weist dazu eine Linearführung mit mindestens einer Führungsschiene auf, an welcher ein Führungsschlitten geführt ist, und an dem über einen Tragarm das Türblatt aufgehängt ist. Die Tragführung ist aufgrund des konstruktiven Aufbaus nicht in der Lage, in ein Fenster oder Türsystem verdeckt eingebaut werden zu können. Ferner ist die Ausgestaltung aufwendig in der Montage und mit der Vielzahl von Bauteilen kostenaufwendig in der Herstellung.

Die WO2014/097211 offenbart eine Antriebsvorrichtung für einen verschiebbaren Flügel, mit einem Antriebsmotor und einem Zahnstangenelement.

Die Aufgabe der vorliegenden Erfindung liegt daher in der Beseitigung der bekannten Mängel und stellt demgegenüber mit geringen Kosten und geringem Bauraum einen Antrieb für einen verschiebbaren Flügel als Schiebeflügel oder Hebe-Schiebeflügel für große Tragmöglichkeiten und optimaler Führung für ein Fenster oder eine Tür bereit, der außerdem auf einfache, schnelle, sichere und präzise Weise auch nachträglich montiert und justiert, sowie demoniert werden kann.

Gelöst wird diese Aufgabe durch eine Antriebsvorrichtung für einen verschiebbaren Flügel als Schiebeflügel oder verschiebbaren Hebe-Schiebeflügel eines Fensters oder einer Tür mit den Merkmalen des Patentanspruchs 1.

Die Antriebsvorrichtung ist dabei so anzuordnen, dass sie sich für einen verschiebbaren Flügel als Schiebeflügel oder verschiebbaren Hebe-Schiebeflügel für ein Fenster oder eine Tür eignet. Dabei weist der bewegliche Flügel zumindest zwei Laufwagen mit jeweils Rollen auf, um auf einer Laufschiene in einer Richtung parallel zur Erstreckung des Flügels oder entlang einer Laufschiene verschoben zu werden. Zur automatisch verschiebbaren Betätigung des Flügels, ist vorzugsweise an einem vertikalen Holm ein Bedienungselement mit einem Schalter vorgesehen, welches eine Antriebsvorrichtung steuert. Mit Betätigung des Bedienungselementes lässt sich der bewegliche Flügel beispielsweise aus einer Schließlage in eine gegenüber einem feststehenden Blendrahmen und einem ortsfestmontierten Flügel bzw. Türfeld verschieben. Andererseits lässt sich der Flügel auch damit in eine gesicherte verschobene Lüftungslage oder einen Bereich einer Durchgangsöffnung bringen. Der Flügel ist dabei in vorteilhafter Weise über bodenseitig aufweisende Laufwagen auf einer Laufschiene abgestützt an dem Blendrahmen verfahrbar gehalten.

Eine Bedienung der Antriebsvorrichtung über eine Fernbedienungseinheit oder ein Smart Home System ist ebenfalls denkbar. Dazu ist an dem Fenster oder der Tür eine Steuereinheit vorgesehen. Die Steuereinheit kann ebenfalls in einer Wand eines Gebäudes untergebracht werden und ist mit dem Bedienungselement und der Antriebsvorrichtung über Steuerleitungen verbunden.

Das Bedienungselement kann außerdem einen in Schließrichtung vorne am vertikalen Holm angeordneten Antrieb steuern, welcher ebenfalls am vertikalen Holm aufweisende Verriegelungsmittel in eine verriegelte Schließlage oder in eine entriegelte geöffnete Position des Flügels überführt. Eine manuelle Betätigung mittels einer Betätigungshandhabe mit Übertragung eines Betätigungsgestänges auf die Verriegelungsmittel ist ebenfalls denkbar.

Bei einem System eines verschiebbaren Hebe-Schiebeflügels eines Fensters oder einer Tür, lässt sich der bewegliche Flügel durch den Antrieb über das Bedienungselement automatisch oder über die manuelle Betätigungshandhabe aus der Schließlage durch eine gekoppelte Verbindung des Betätigungsgestänges auf die Laufwagen in eine angehobene Öffnungsstellung befördern, um anschließend durch die Antriebsvorrichtung verschoben werden zu können. Ebenso können auch beide voran beschriebenen Betätigungsvarianten in einem Fenster oder einer Tür angeordnet sein, welche den Anforderungen entsprechend ausgewählt werden können und dem Charakter eines Hybridsystems gleichen. Dem System ausgewählte zusätzliche Antriebe sind zusätzlich mit den Steuerleitungen verbunden und mit der Steuereinheit verknüpft.

Damit diese Stellungen des Flügels relativ zum feststehenden Blendrahmen sowie zum fest montierten Flügel bzw. zum festen Türfeld möglich sind, wird zwischen dem beweglichen Flügel und dem feststehenden Blendrahmen eine besondere Beschlaganordnung, nämlich ein sogenanntes System für Schiebeflügel oder verschiebbaren Hebe-Schiebeflügel vorgesehen.

Erfindungsgemäß umfasst die Antriebsvorrichtung zum Verschieben des Flügels einen flügelseitig angeordneten Antriebsmotor mit einer daran angetriebenen Gewindespindel. Die Gewindespindel ist um ein am Blendrahmen angeordnetes Zahnstangenelement zwangsgeführt.

Alle Bauteilekomponenten der Antriebsvorrichtung werden zur Vereinfachung der Montage vor dem Einbau in das Gehäuse und in die Führungsschiene montiert. Als eine einfache Handhabung der Montage des Zahnstangenelementes in die Führungsschiene, überzeugt die modulare Aneinanderreihung von Bauteilen baulich gleicher Zahnsegmente, die sowohl von der offenen Seite oder auch in die Öffnung der im Querschnitt U-förmig ausgebildeten Führungsschiene in die Profilnut oder den Kanal der Führungsschiene eingefügt werden können. Zum Einfügen der Zahnsegmente durch die sich auf der Gesamtlänge der Führungsschiene erstreckende schlitzartige Öffnung, ist das Zahnsegment in Kontur und Länge gesondert ausgebildet.

Das Zahnsegment besteht vorzugsweise aus einem im Spritzgießverfahren hergestellten Kunststoff oder einem Druckguss und ist im Querschnitt T-förmig. Die T-förmige Formgebung entsteht durch die Formgebung der Profilnut der Führungsschiene. Im eingeführten Zustand liegt das Zahnsegment im Innenraum der Profilnut stützend auf bildenden Führungsflächen auf.

Mit Einhaltung eines einteilig und kostengünstig hergestellten Gegenstandes des Zahnsegmentes, ist das Zahnsegment zum Montieren durch die schlitzartige Öffnung der Führungsschiene und modularen Verkettung einzelner Zahnsegmente an den Seiten über einen Winkel angeschrägt und weist einen als Rhombus geformten Fuß auf, der an den jeweiligen Enden gestuft ist. Aufgrund der in einem Winkel angeschrägten Seiten mit Abstimmung der Länge des Zahnsegmentes, gelingt es, mit leicht versetzt gedrehter Lage des Zahnsegmentes zur Längsrichtung der Führungsschiene und damit der schlitzartigen Öffnung, das Zahnsegment durch die Öffnung in eine längsverschiebbare hintergreifende Lage der Führungsschiene zu montieren.

Sobald weitere Zahnsegmente die längsverschiebbare hintergreifende Lage in der Profilnut der Führungsschiene erreicht haben, lassen sich die Zahnsegmente mittels der gestuften Enden zu einer Baueinheit eines Zahnstangenelementes verbinden.

Dazu sind die gestuften Enden der Zahnsegmente Treppen förmig ausgebildet und weisen beim Übergang der Stufe oder Treppe einen Hinterschnitt auf, so dass sich mit Eindrehen der Zahnsegmente eine formschlüssige ineinandergreifend verbindende Verkettung ergibt. In Wirkverbindung der gefügten Zahnsegmente, wird eine gesicherte hintergreifende Position in der Profilnut der Führungsschiene erreicht.

Mit Erreichen der längserstreckenden Einbaulage, d.h., des Endmontagezustands des Zahnstangenelementes in der Profilnut der Führungsschiene, sind die Zahnsegmente mit dem am beweglichen Flügel befindlichen Schlitten und der Gewindespindel der Antriebsvorrichtung wirkverbunden. Dazu weist das Zahnsegment auf einer Deckfläche in Richtung der flügelseitigen Bauteile der Antriebsvorrichtung eine Führungsschiene auf, die mit dem Führungsschlitten des Schlittens in formschlüssig gleitend beweglicher Wirkverbindung steht. Weiter sind auf der Deckfläche Ansätze von Gewindeflanken vorgesehen, die in der Breite des Führungsschlittens des Schlittens angepasst, in wirksamer Verbindung mit der Gewindespindel eine rotatorische Bewegung in eine translatorische Bewegung zum Verschieben des Flügels in Längsrichtung der Führungsschiene umwandeln.

Das Verbinden der flügelseitigen Bauteile der Antriebsvorrichtung über den Schlitten mit dem am Blendrahmen angeordneten Zahnstangenelement der Antriebsvorrichtung über die Führungsschiene, sichert außerdem automatisch die Endmontagestellung der Antriebsvorrichtung für ein unbeabsichtigtes Verstellen der Bauteile und für ein Betriebszustand zum automatischen Verschieben des Fensters oder der Tür in horizontaler Richtung. Eine Demontage der Antriebsvorrichtung, ist erst nach dem lösen des Schlittens aus der formschlüssigen Verbindung aus der Führungsschiene des Zahnstangenelementes möglich.

Bevorzugte Ausführungsbeispiele der Erfindung sind in der Zeichnung schematisch dargestellt und werden nachfolgend mit Bezug zu den Figuren der Zeichnung näher erläutert.

Es zeigen:
- Fig. 1: eine perspektivische Ansicht eines verschiebbaren Flügels als Schiebeflügel oder verschiebbaren Hebe-Schiebeflügel eines Fensters oder einer Tür,
- Fig. 2: eine perspektivische Ansicht eines verschiebbaren Flügel als Schiebeflügel oder verschiebbaren Hebe-Schiebeflügel nach Fig. 1 mit einer Führungsschiene ohne Blendrahmen und Festfeld eines Fensters oder einer Tür,
- Fig. 3: eine Schnittdarstellung des Fensters oder der Tür nach Fig. 1 durch die Führungsschiene und die Antriebsvorrichtung,
- Fig. 4: eine Schnittdarstellung nach Fig. 7 durch die Antriebsvorrichtung,
- Fig. 5: eine Vorderansicht des verschiebbaren Flügels als Schiebeflügel oder verschiebbaren Hebe-Schiebeflügel nach Fig. 2 mit der Führungsschiene ohne Blendrahmen und Festfeld des Fensters oder einer Tür,
- Fig. 6: ein perspektivischer Ausschnitt nach Fig. 2 mit der Antriebsvorrichtung und der Führungsschiene,
- Fig. 7: eine perspektivische Ansicht der Antriebsvorrichtung,
- Fig. 8: eine perspektivische Ansicht der Antriebsvorrichtung ohne ein Zahnstangenelement,
- Fig. 9: eine perspektivische Ansicht der Antriebsvorrichtung ohne ein Gehäuse nach Fig. 8,
- Fig. 10: eine perspektivische Ansicht einer Gewindespindel mit einer Formhälfte eines Schlittens der Antriebsvorrichtung nach Fig. 8,
- Fig. 11: eine Vorderansicht der Gewindespindel nach Fig. 10,
- Fig. 12: eine perspektivische Ansicht eines Zahnsegmentes des Zahnstangenelementes nach Fig. 7,
- Fig. 13: eine perspektivische Ansicht eines Zahnsegmentes des Zahnstangenelementes nach Fig. 12,
- Fig. 14: eine Draufsicht des Zahnsegmentes nach Fig. 12 und
- Fig. 15: eine Vorderansicht des Zahnsegmentes nach Fig. 12.

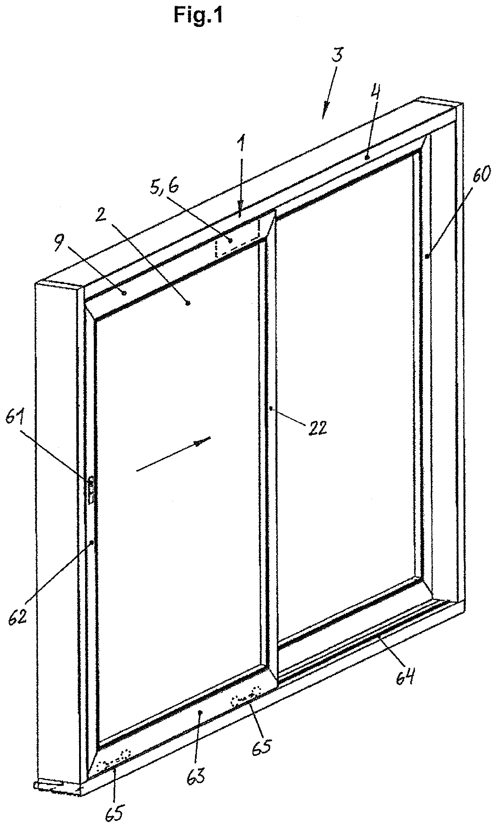

Die Fig. 1 zeigt in perspektivischer Ansicht eines Fensters oder einer Tür 3, einen Blendrahmen 4 mit einem verschiebbaren Flügel 2 und einem fest montierten Flügel bzw. Türfeld 60, der diesem benachbart ist. Zur Betätigung des beweglichen Flügels 2, ist an einem vertikalen Holm 62 ein Bedienungselement 61 mit einem Schalter vorgesehen, welches eine Antriebsvorrichtung 1 steuert. Mit Betätigung des Bedienungselementes 61 lässt sich der bewegliche Flügel 2; beispielsweise aus der in Fig. 1 aufweisenden Schließlage in eine, entsprechend der Pfeilrichtung, nicht dargestellte Position gegenüber dem feststehenden Blendrahmen 4 und dem ortsfestmontierten Flügel bzw. Türfeld 60 verschieben, aber andererseits auch in eine gesicherte verschobene Lüftungslage oder einen Bereich einer Durchgangsöffnung bringen. Der Flügel 2 ist dabei über ein oder mehrere hängende oder nach Fig. 1 bodenseitig aufweisende Laufwagen 65 auf einer Laufschiene 64 abgestützt an dem Blendrahmen 4 verfahrbar gehalten.

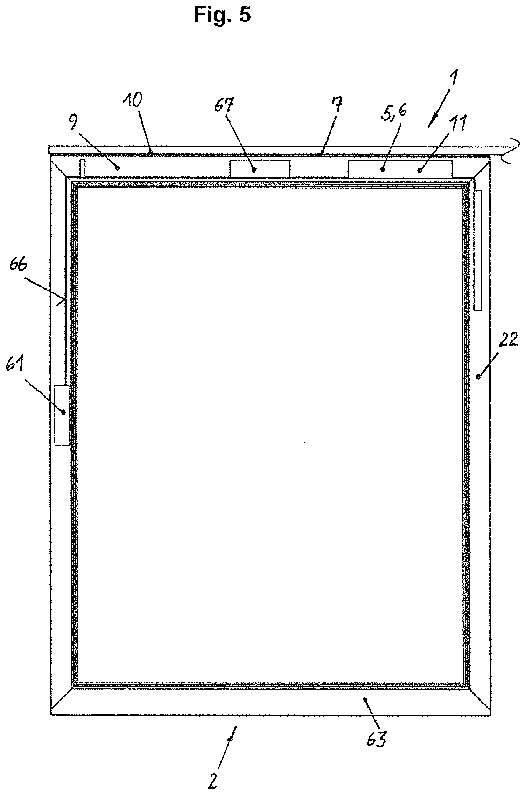

Eine Bedienung der Antriebsvorrichtung 1 über eine Fernbedienungseinheit oder ein Smart Home System ist ebenfalls denkbar. Dazu ist an dem Fenster oder der Tür 3 nach Fig. 5 eine Steuereinheit 67 vorgesehen. Die Steuereinheit 67 kann ebenfalls in einer Wand eines Gebäudes untergebracht werden und ist mit dem Bedienungselement 61 und der Antriebsvorrichtung 1 über Steuerleitungen 66 verbunden.

Das Bedienungselement 61 kann außerdem einen in Schließrichtung vorne am vertikalen Holm 62 - nicht dargestellte - Antrieb steuern, welcher ebenfalls am vertikalen Holm 62 - nicht darstellte - Verriegelungsmittel in eine verriegelte Schließlage oder in eine entriegelte geöffnete Position des Flügels 2 überführt. Eine manuelle Betätigung mittels einer Betätigungshandhabe mit Übertragung eines Betätigungsgestänges auf die Verriegelungsmittel ist ebenfalls denkbar.

Bei einem System eines verschiebbaren Hebe-Schiebeflügels 2 eines Fensters oder einer Tür 3, lässt sich der bewegliche Flügel 2 durch den - nicht dargestellten - Antrieb über das Bedienungselement 61 automatisch oder über die manuelle Betätigungshandhabe aus der in den Fig. 1 aufweisenden Schließlage durch eine gekoppelte Verbindung des Betätigungsgestänges auf die Laufwagen 65 in eine angehobene Öffnungsstellung befördern, um anschließend durch die Antriebsvorrichtung 1 verschoben werden zu können.

Ebenso können auch beide voran beschriebenen Betätigungsvarianten in einem Fenster oder einer Tür 3 angeordnet sein, welche den Anforderungen entsprechend ausgewählt werden können und dem Charakter eines Hybridsystems gleichen. Dem System ausgewählte, zusätzliche Antriebe sind ebenso mit den Steuerleitungen 66 verbunden und mit der Steuereinheit 67 verknüpft.

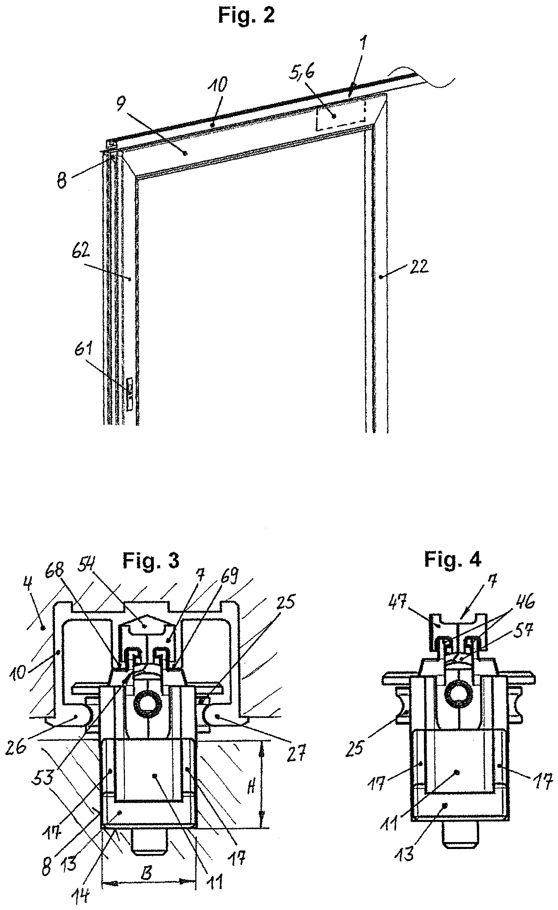

Damit diese Stellungen des Flügels 2 relativ zum feststehenden Blendrahmen 4 sowie zum fest montierten Flügel bzw. zum festen Türfeld 60 möglich sind, wird zwischen dem beweglichen Flügel 2 und dem feststehenden Blendrahmen 4 eine besondere Beschlaganordnung, nämlich ein sogenanntes System für Schiebeflügel oder verschiebbaren Hebe-Schiebeflügel vorgesehen, von dem in der Fig. 1 der Einfachheit halber nur das Bedienungselement 61 am Flügel 2, ein Teil einer unteren Laufschiene 64 für die Laufwagen 65 und eine obere Führungsschiene 10 nach Fig. 2 andeutungsweise zu sehen ist.

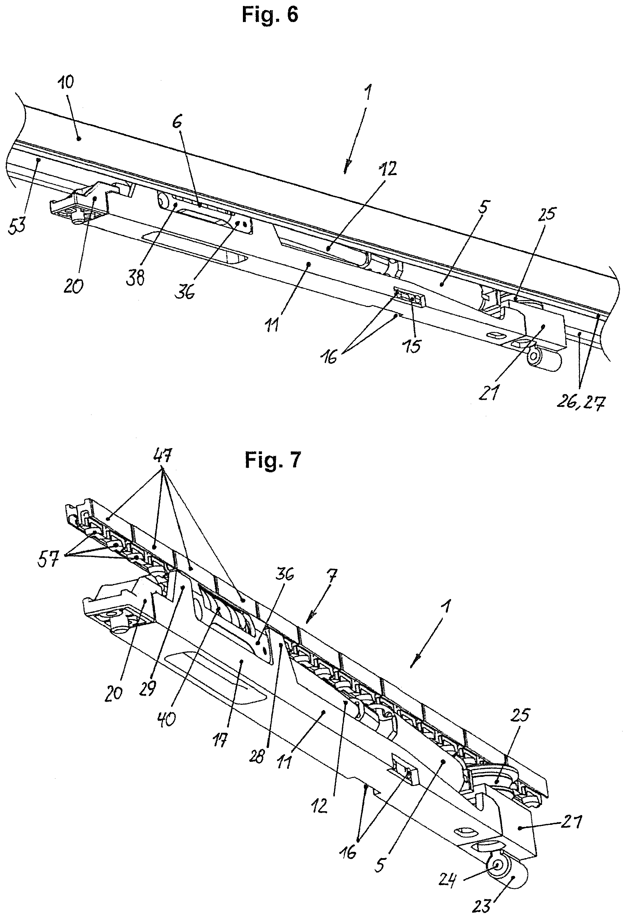

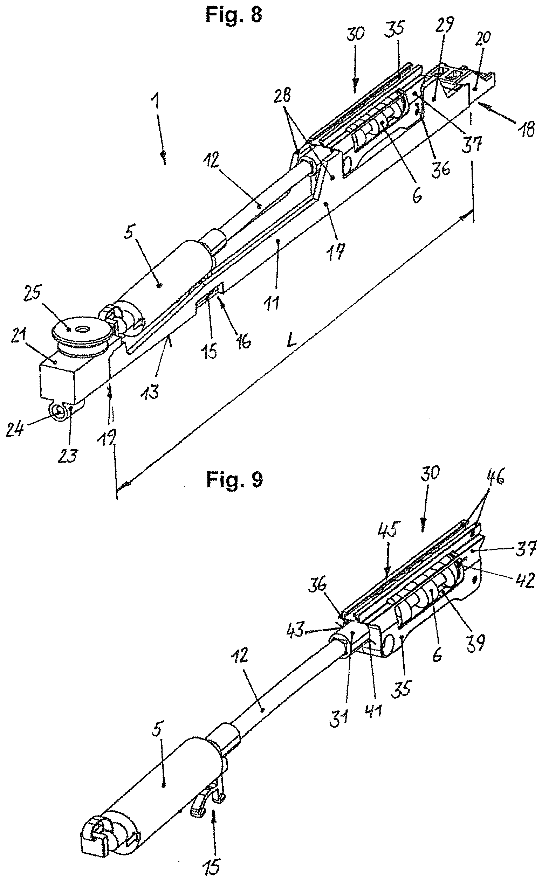

Nach der Fig. 8 umfasst die Antriebsvorrichtung 1 einen flügelseitig angeordneten Antriebsmotor 5 mit einer daran angetriebenen Gewindespindel 6. Die Gewindespindel 6 ist nach Fig. 5 und Fig. 7 um ein am Blendrahmen 4 angeordnetes Zahnstangenelement 7 zwangsgeführt. Nach Fig. 3 ist die Antriebsvorrichtung 1 in Einbaulage des Flügels 2 nahezu vollständig in einer Ausnehmung oder Aufnahmenut 8 eines oberen, horizontalen Holms 9 des beweglichen Flügels 2 und einer am Blendrahmen 4 angeordneten Führungsschiene 10 verdeckt liegend angeordnet. Der Antriebsmotor 5 und die Gewindespindel 6 sind als eine Baueinheit bildend in einem Gehäuse 11 gelagert. Das Zahnstangenelement 7 wird nahezu vollständig von der Führungsschiene 10 umgriffen. Ein Spalt in der Führungsschiene 10 bildet eine Öffnung und damit die Möglichkeit zur Kopplung zwischen den am Flügel 2 angeordneten Bauteilen und den am Blendrahmen 4 montierten Bauteilen der Antriebsvorrichtung 1.

Aus den Figuren 8 und 9 wird deutlich, dass der Antriebsmotor 5 und die Gewindespindel 6 für eine rotatorische Übertragung der Bewegung durch eine formschlüssige Verbindung mit einer flexiblen Welle 12 oder einem Kardan in Längsrichtung zur Verschieberichtung des Flügels 2 antriebsverbunden sind.

In Fig. 8 ist der Antriebsmotor 5 und die Gewindespindel 6 senkrecht zum Gehäuse 11 und damit zur Ausnehmung oder Aufnahmenut 8 des Flügels 2 achsversetzt angeordnet, wobei der Antriebsmotor 5 nach Fig. 3 einer Bodenplatte 13 des Gehäuses 11 und damit einem Boden 14 der Ausnehmung oder Aufnahmenut 8 zugewandt ist und die Gewindespindel 6 von dem Boden 14 in Richtung Zahnstangenelement 7 beabstandet ist. Mit der Verlagerung der Bauteile des Antriebsmotors 5 und der Gewindespindel 6 in der Höhe, erreicht der Antriebsmotor 5 einen größtmöglichen Bauraum im Gehäuse 11, wobei die Gewindespindel 6 den nötigen Freiraum zur Entfaltung der Gewindesteigung für ein Zusammenspiel mit dem Zahnstangenelement 7 erhält.

Unterhalb des Antriebsmotors 5 auf der Seite zur Bodenplatte 13 des Gehäuses 11 ist nach Fig. 9 ein Rastglied 15 vorgesehen, welches in eine Ausnehmung 17 des Gehäuses 11 kraftschlüssig einklipsbar ist. Dazu sind an der Außenseite des Rastglieds 15, der Ausnehmung 16 entsprechend angepasst, elastische Rastvorsprünge mit Einlaufschrägen versehen. Bei der Montage rasten die Rastvorsprünge in die Ausnehmung 16 des Gehäuses 11 mit leichter Federkraft ein und bilden eine lösbare Verbindung mit dem Gehäuse 11. Wie in Fig. 9 dargestellt, können der Antriebsmotor 5 und die Gewindespindel 6 mit der Welle 12 und einem Schlitten 30 als integrale Baueinheit vormontiert mittels des Rastglieds 15 in das Gehäuse 11 fixierend positioniert werden. Das Gehäuse 11 ermöglicht dem Antriebsmotor 5 eine sichernde Aufnahme und Befestigung, sowie der Gewindespindel 6 eine funktionsgerechte Lagerung und ein Schutz vor Schmutz und Beschädigungen. Dadurch ist gleichzeitig die integrale Baueinheit leicht zugänglich und kann bei Bedarf auch ausgewechselt werden.

Der bewegliche Flügel 2 umfasst vier Holme 9, 22, 62, 63, die als Hohlprofile, insbesondere als Aluminium- oder Kunststoffprofile, oder als Vollprofile bestehend aus Holz ausgebildet sind. Die Holme enthalten vorgefertigte Ausnehmungen oder Aufnahmenuten zur verdeckten Montage von Beschlagbauteilen. So ist in dem oberen horizontalen Holm 9 die Antriebsvorrichtung 1 vorgesehen, die zum vertikalen Holm 22 gerichtet angeordnet ist. Vorzugsweise sind die flügelseitigen Bauteile der Antriebsvorrichtung 1, insbesondere das Gehäuse 11, in der Höhe H und der Breite B der Ausnehmung oder Aufnahmenut 8 des oberen horizontalen Holms 9 des Flügels 2 angepasst ausgebildet. Zusätzliche Arbeitsschritte für eine Montage der Antriebsvorrichtung 1 am Flügel 2 bleiben somit aus.

In Fig. 8 ist das Gehäuse 11 als U- förmige Querschnittskontur ausgebildet, wobei über die Länge L des Gehäuses 11 die jeweiligen Seitenwandungen 17 ausgehend von der Bodenplatte 13 in der Höhe variieren. Die leistenförmig ausgebildeten Seitenwandungen 17 sind aufgrund funktioneller, lager- oder schutzbildenden Eigenschaften unterschiedlich hoch. Die maximale Höhe des Gehäuses 11 wird an den Lagerstellen der Gewindespindel 6 erreicht.

Um die Antriebsvorrichtung 1 in dem beweglichen Flügel 2 lösbar fixiert in der Aufnahmenut 8 nach Fig. 1 und Fig. 3 einfach zu verbinden, gehen die jeweiligen längsseitigen Enden 18, 19 nach Fig. 7 und Fig. 8 des Gehäuses 11 eine form- und/ oder kraftschlüssige Verbindung mit am Flügel 2 befestigten Begrenzungs- und Befestigungsteilen 20, 21 ein. Dabei wird das Gehäuse 11 zusammen mit den flügelseitigen Bauteilen der Antriebsvorrichtung 1 als einteiliges Bauteil bildend von einem offenen Ende des oberen horizontalen Holms 9 des Flügels 2 in die Ausnehmung oder Aufnahmenut 8 eingeführt, wobei das eine Ende 18 des Gehäuses 11 eine horizontal und vertikal lagefixierte Formschlussverbindung mit einem in der Ausnehmung oder Aufnahmenut 8 durch eine Befestigungsschraube kraftschlüssig befestigten Begrenzungsteil 20 eingeht. Weiter in Fig. 8 ersichtlich, weist das am anderen Ende 19 und zum vertikalen Holm 22 des beweglichen Flügels 2 nach Fig. 5 angeordnete Befestigungsteil 21 einen kreisrunden Träger 23 mit einer Bohrung 24 auf, der in eine am oberen horizontalen Holm 9 unterhalb der Ausnehmung oder Aufnahmenut 8 angeordnete Aufnahme formschlüssig eingreift und durch eine Befestigungsschraube mit dem beweglichen Flügel 2 eine kraftschlüssige Verbindung eingeht.

An dem zum vertikalen Holm 22 des oberen horizontalen Holms 9 weisenden Ende des beweglichen Flügels 2 nach Fig. 1 und Fig. 7, ist in der Aufnahmenut 8 an dem Befestigungsteil 21 eine in Richtung der Führungsschiene 10 quer und von der Ausnehmung oder Aufnahmenut 8 des Flügels 2 beabstandet kugelgelagerte Laufrolle 25 angeordnet, die in seitlich angeordneten Querführungen 26, 27 der Führungsschiene 10 verschiebbar gelagert ist. Nicht dargestellt, wird am anderen Ende des oberen horizontalen Holms 9 der Flügel 2 mit einer weitere Laufrolle ausgerüstet, die ebenfalls am Flügel 2 form- und / oder kraftschlüssig befestigt ist. Die seitlich an dem Flügel 2 befestigten Laufrollen sorgen für den sicheren verschiebbaren Halt des oberen horizontalen Bereichs des beweglichen Flügels 2.

Nach Fig. 7 und Fig.8 erstrecken sich zwei voneinander entfernte Ständer 28, 29 auf die maximale Höhe des Gehäuses 11 und enden, ausgehend von der Bodenplatte 13 in Richtung Zahnstangenelement 7, nahezu auf gleicher Höhe des Schlittens 30. Das Gehäuse 11 bildet eine Art Aufnahme für den Schlitten 30, in dem die Gewindespindel 6 drehbeweglich gelagert ist.

Der Antriebsmotor 5 ist über eine Kupplung mit der antreibend drehbaren Welle 12 verbunden, die wiederum mit einer, um den ortsfest gelagerten Schlitten 30 herum drehbar gelagerten Gewindestange der Gewindespindel 6, nach Fig. 8 und Fig. 9, gekuppelt ist. Der im Gehäuse 11 drehgesichert aufweisende Schlitten 30, lässt sich hingegen entlang der Führungsschiene 10 verfahren. Dazu ist die Gewindespindel 6 mittels eines Gewindes 34 drehwirksam mit dem Zahnstangenelement 7 verbunden, und ist in Verlängerung der Mittelachse an den jeweiligen Enden als zylindrischer Rundstab 31, 32 ausgebildet.

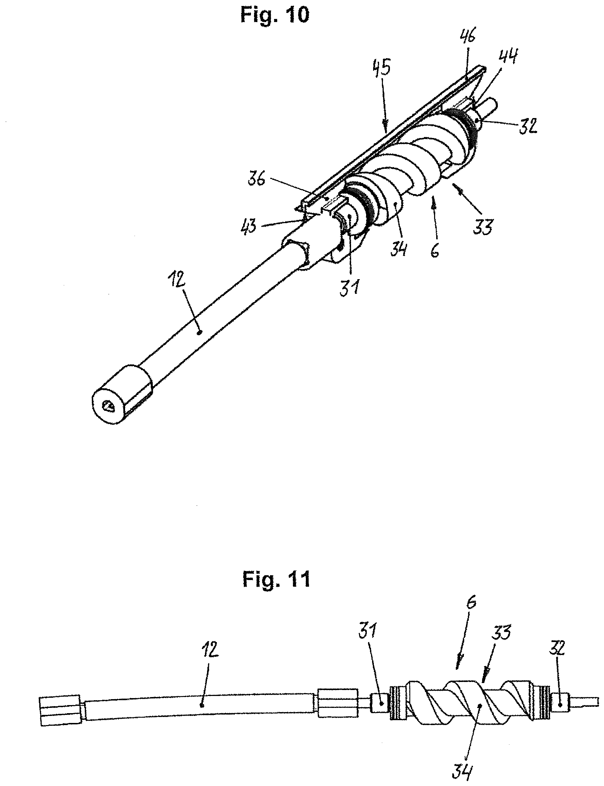

Nach Fig. 9 und Fig. 10 wird der Schlitten 30 aus zwei Formhälften 35, 36 gefertigt, welche durch form- und/ oder kraftschlüssige Verbindung im Querschnitt ein Quadrat oder ein Rechteck ausbilden. Um einen größtmöglichen Bauraum für das Gewinde 34 der Gewindespindel 6 zu erreichen, weist der Schlitten 30 an den jeweiligen Seitenflächen 37, 38 fensterartige Öffnungen 39, 40 auf, in welche das Gewinde 34 der Gewindespindel 6 hineinragt. Zusätzlich können die Öffnungen 39, 40 als Sicherung gegen ein unbeabsichtigtes Verschieben der Gewindespindel 6 beitragen.

Zur einfachen Kupplung der Gewindespindel 6, weisen die jeweiligen Enden der Formhälften 35, 36 nach Fig. 9 und Fig. 10 halbkreisförmige Ausschnitte 41, 42; 43, 44 auf, welche durch Fügen einen kreisförmigen Ausschnitt zur Lagerung des zylindrischen Rundstabs 31, 32 für eine rotatorische Bewegung der Gewindespindel 6 ausbilden.

Zum Führen des beweglichen Flügels 2 in Längsrichtung des Fenster oder der Tür 3 innerhalb des Blendrahmens 4, ist auf der zum Zahnstangenelement 7 gerichteten Außenseite 45 des Schlittens 30 ein Führungsschlitten 46 angeformt. Da der Führungsschlitten 46 oberhalb der Gewindespindel 6 angeordnet ist, greift das Zahnstangenelement 7 zwischen den Führungsschlitten 46 durch eine Nut für ein Zusammenwirken mit der Gewindespindel 6 ein.

Alle Bauteilekomponenten der Antriebsvorrichtung 1 werden vor der Montage in das Gehäuse 11 nach Fig. 8 und in die Führungsschiene 10 nach Fig. 6 montiert. Zur einfachen Montage und zum Einbau des Zahnstangenelementes 7 in die Führungsschiene 10 in den Blendrahmen 4 und zur Kopplung an die Bauteilekombination in dem Flügel 2 der Antriebsvorrichtung 1, ist das Zahnstangenelement 7 aus Zahnsegmenten 47 gebildet, welche modular miteinander verbindbar sind und eine integrale Baueinheit bilden.

Das Zahnsegment 47 besteht vorzugsweise aus einem im Spritzgießverfahren hergestellten Kunststoff oder einem Druckguss und ist im Querschnitt T-förmig. Die T-förmige Formgebung entsteht durch die Formgebung der Profilnut 54 und der Öffnung 53 der Führungsschiene 10. Im eingeführten Zustand des Zahnsegmentes 47 in der Profilnut 54, liegt das Zahnsegment 47 im Innenraum der Profilnut 54 stützend auf jeweils neben einer Öffnung 53 sich bildenden Führungsflächen 68, 69.

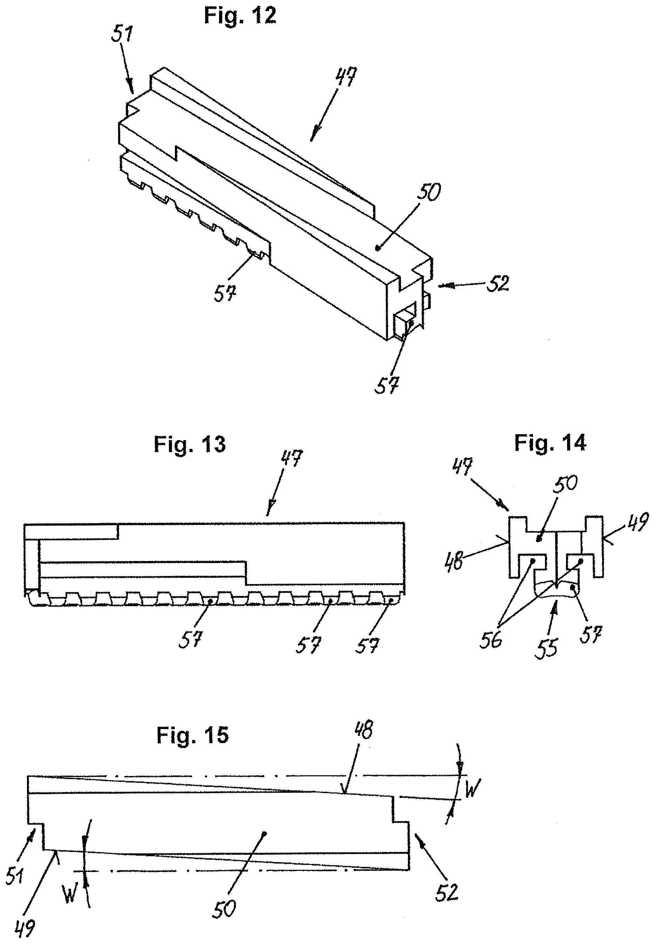

Das Zahnsegment 47 ist zum Einsatz in die Führungsschiene 10 nach Fig. 14 an den Seiten 48, 49 über einen Winkel W angeschrägt und weist nach Fig. 12 einen als Rhombus geformten Fuß 50 auf, der an den jeweiligen Enden 51, 52 gestuft ist. Nach Fig. 3 wird das Zahnsegment 47 durch die am Blendrahmen 4 des Fensters oder einer Tür 3 sich ergebende Öffnung 53 der befestigbaren C-förmig hinterschnittenen Profilnut 54 der Führungsschiene 10, durch welche das Zahnsegment 47 mit dem am Flügel 2 befindlichen Schlitten 30 und Gewindespindel 6 der Antriebsvorrichtung 1 wirkverbunden ist, eingeführt. Mit den in einem Winkel W angeschrägten Seiten 48, 49 des Zahnsegmentes 47 gelingt es, in leicht versetzt gedrehter Lage des Zahnsegmentes 47 zur Längsrichtung der Führungsschiene 10 das Zahnsegment 47 durch die Öffnung 53 in eine längsverschiebbare hintergreifende Lage der Führungsschiene 10 gefügt zu werden.

Sobald weitere Zahnsegmente 47 die längsverschiebbare hintergreifende Lage nach Fig. 3 und Fig. 6 in der Führungsschiene 10 erreicht haben, lassen sich die Zahnsegmente 47 mittels der gestuften Enden 51, 52 zu einer Baueinheit nach Fig. 7 - ohne Darstellung der Führungsschiene 10 - zu einem Zahnstangenelement 7 verbinden.

Dazu sind nach Fig. 14 die gestuften Enden 51, 52 der Zahnsegmente 47 treppenförmig ausgebildet und weisen beim Übergang der Stufe oder Treppe einen Hinterschnitt auf, so dass sich mit Eindrehen der Zahnsegmente 47 eine formschlüssige ineinandergreifend verbindende Verkettung ergibt. In Wirkverbindung der ineinandergefügten Zahnsegmente 47, wird eine gesicherte hintergreifende Position in der Profilnut 54 der Führungsschiene 10 erreicht.

Mit Erreichen der längserstreckenden Einbaulage, d.h., des Endmontagezustands des Zahnstangenelementes 7 in der Profilnut 54 der Führungsschiene 10, ist das Zahnsegment 47 mit dem am Flügel 2 befindlichen Schlitten 30 und der Gewindespindel 6 der Antriebsvorrichtung 1 wirkverbunden. Dazu weist nach Fig. 3 und Fig. 15 das Zahnsegment 47 auf einer Deckfläche 55 in Richtung der flügelseitigen Bauteile der Antriebsvorrichtung 1 eine Führungsschiene 56 auf, die mit dem Führungsschlitten 46 des Schlittens 30 in formschlüssig beweglicher Wirkverbindung steht. Weiter sind auf der Deckfläche 55 Ansätze von Gewindeflanken 57 vorgesehen, die in wirksamer Verbindung mit der Gewindespindel 6 eine rotatorische Bewegung in eine translatorische Bewegung zum Verschieben des Flügels 2 in Längsrichtung der Führungsschiene 10 umwandeln.

Das Verbinden der flügelseitigen Bauteile der Antriebsvorrichtung 1 über den Schlitten 30 mit dem am Blendrahmen 4 angeordneten Zahnstangenelement 7 der Antriebsvorrichtung 1 über die Führungsschiene 56, sichert außerdem automatisch die Endmontagestellung der Antriebsvorrichtung 1 für ein unbeabsichtigtes Verstellen der Bauteile und für einen Betriebszustand zum automatischen Verschieben des Fensters oder der Tür 3 in horizontaler Richtung. Eine Demontage der Antriebsvorrichtung 1, ist erst nach dem Lösen des Schlittens 30 aus der formschlüssigen Verbindung aus der Führungsschiene 56 des Zahnstangenelementes 7 möglich.

### Bezugszeichenliste

- 1: Antriebsvorrichtung
- 2: Flügel
- 3: Fenster oder Tür
- 4: Blendrahmen
- 5: Antriebsmotor
- 6: Gewindespindel
- 7: Zahnstangenelement
- 8: Aufnahmenut
- 9: horizontaler Holm
- 10: Führungsschiene
- 11: Gehäuse
- 12: Welle
- 13: Bodenplatte
- 14: Boden
- 15: Rastglied
- 16: Ausnehmung
- H: Höhe
- B: Breite
- L: Länge
- 17: Seitenwandung
- 18: Ende
- 19: Ende
- 20: Begrenzungs-/ Befestigungsteil
- 21: Begrenzungs-/ Befestigungsteil
- 22: vertikaler Holm
- 23: Träger
- 24: Bohrung
- 25: Laufrolle
- 26: Querführung
- 27: Querführung
- 28: Ständer
- 29: Ständer
- 30: Schlitten
- 31: Rundstab
- 32: Rundstab
- 33: Abschnitt
- 34: Gewinde
- 35: Formhälfte
- 36: Formhälfte
- 37: Seitenfläche
- 38: Seitenfläche
- 39: Öffnung
- 40: Öffnung
- 41: Ausschnitt
- 42: Ausschnitt
- 43: Ausschnitt
- 44: Ausschnitt
- 45: Außenseite
- 46: Führungsschlitten
- 47: Zahnsegment
- 48: Seite
- 49: Seite
- W: Winkel
- 50: Fuß
- 51: Ende
- 52: Ende
- 53: Öffnung
- 54: Profilnut
- 55: Deckfläche
- 56: Führungsschiene
- 57: Gewindeflanke
- 60: Flügel/ Türfeld
- 61: Bedienungselement
- 62: vertikaler Holm
- 63: horizontaler Holm
- 64: Laufschiene
- 65: Laufwagen
- 66: Steuerleitung
- 67: Steuereinheit
- 68: Führungsfläche
- 69: Führungsfläche

## Patentansprüche

1. Antriebsvorrichtung (1) für einen verschiebbaren Flügel (2) als Schiebeflügel oder verschiebbaren Hebe-Schiebeflügel eines Fensters oder einer Tür (3), mit einem Blendrahmen (4), in dem der Flügel (2) verschiebbar gehalten ist, wobei die Antriebsvorrichtung (1) zum Verschieben des Flügels (2) einen flügelseitig anordenbaren
Antriebsmotor (5) mit einer daran angetriebenen Gewindespindel (6) umfasst, die um ein am Blendrahmen (4) anordenbares Zahnstangenelement (7) der Antriebsvorrichtung (1) zwangsgeführt ist,
wobei das Zahnstangenelement (7) von einer Führungsschiene (10) der Antriebsvorrichtung (1) umgreifend festlegbar ist und aus Zahnsegmenten (47) gebildet ist, welche modular miteinander verbindbar sind und eine integrale Baueinheit bilden, **dadurch gekennzeichnet,**
**dass** das Zahnsegment (47) zum Einsatz in die Führungsschiene (10) an den Seiten (48, 49) über einen Winkel (W) angeschrägt einen rhombusförmigen Fuß (50) ausbildet, der an den jeweiligen Enden (51, 52) gestuft ist und durch eine Öffnung (53) der Führungsschiene (10) in einer hinterschnittenen Profilnut (54) montiert festlegbar ist.

2. Antriebsvorrichtung (1) nach Anspruch 1,
**dadurch gekennzeichnet,**
**dass** die gestuften Enden (51, 52) der Zahnsegmente (47) treppenförmig ausgebildet sind und sich ineinander verbindend Verketten.

3. Antriebsvorrichtung (1) nach Anspruch 1,
**dadurch gekennzeichnet,**
**dass** das Zahnsegment (47) auf einer Deckfläche (55) in Richtung der flügelseitigen Bauteile der Antriebsvorrichtung (1) eine Führungsschiene (56) aufweist, die mit einem auf der zum Zahnstangenelement (7) gerichteten Außenseite (45) eines Schlittens (30) angeformten Führungsschlittens (46) in formschlüssig beweglicher Wirkverbindung steht und das auf der Deckfläche (55) Ansätze von Gewindeflanken (57) vorgesehen sind, die mit wirksamer Verbindung mit der Gewindespindel (6) eine rotatorische Bewegung in eine translatorische Bewegung zum Verschieben des Flügels (2) in Längsrichtung der Führungsschiene (10) umwandeln.

## Claims

1. A driving device (1) for a slidable casement (2) as a sliding casement or slidable lifting and sliding casement of a window or a door (3), having a window frame (4), in which the casement (2) is slidably held, wherein the driving device (1) for sliding the casement (2) comprises a drive motor (5), which can be arranged on the casement side, with a threaded spindle (6) driven thereon, which is forcibly guided around a gear rack element (7) of the driving device (1), which can be arranged at the window frame (4),
the gear rack element (7) being encompassingly fixable by a guide rail (10) of the driving device (1) and being formed from gear segments (47), which can be modularly connected with one another and form an integral structural unit,
**characterized in that**
the gear segment (47), for insertion into the guide rail (10) at the sides (48, 49), forms a rhombus-shaped foot (50) beveled via an angle (W), which is stepped at the respective ends (51, 52) and can be fixed through an opening (53) of the guide rail (10) assembled in an undercut profile groove (54).

2. The driving device (1) according to claim 1,
**characterized in that**
the stepped ends (51, 52) of the gear segments (47) are formed in a staircase shape and connectively interlink one inside the other.

3. The driving device (1) according to claim 1,
**characterized in that**
the gear segment (47) has a guide rail (56) on a top surface (55) towards the casement-side components of the driving device (1), which is operatively connected in a form-fittingly movable manner with guide block (46) molded-on on the outside (45) of a block (30) facing the gear rack element (7), and bases of thread flanks (57) are provided on the top surface (55), which, operatively connected with the threaded spindle (6), convert a rotary movement into a translational movement for sliding the casement (2) in the longitudinal direction of the guide rail (10).

## Revendications

1. Dispositif d'entraînement (1) pour un ouvrant coulissant (2) en tant qu'ouvrant coulissant ou ouvrant à levage et à coulissement déplaçable d'une fenêtre ou d'une porte (3), muni d'un châssis dormant (4) dans lequel l'ouvrant (2) est maintenu de manière coulissante, le dispositif d'entraînement (1) pour déplacer l'ouvrant (2) comprenant un moteur d'entraînement (5) qui peut être disposé du côté de l'ouvrant et sur lequel est entraînée une broche filetée (6) qui est guidée positivement autour d'un élément de crémaillère (7 ) du dispositif d'entraînement (1) pouvant être disposé sur le châssis dormant (4),
dans lequel l'élément de crémaillère (7) peut être fixé de manière englobante par un rail de guidage (10) du dispositif d'entraînement (1), et est formé de segments dentés (47) pouvant être reliés les uns aux autres de manière modulaire et former une unité monobloc,
**caractérisé en ce que**
le segment denté (47) forme un pied rhomboïde (50) pour l'insertion dans le rail de guidage (10) sur les côtés (48, 49), pied biseauté selon un angle (W) qui est étagé aux extrémités respectives (51, 52) et qui peut être fixé à travers une ouverture (53) du rail de guidage (10) monté dans une rainure profilée en contre-dépouille (54).

2. Dispositif d'entraînement (1) selon la revendication 1,
**caractérisé en ce que**
les extrémités étagées (51, 52) des segments dentés (47) sont en forme de gradins et concaténées entre elles.

3. Dispositif d'entraînement (1) selon la revendication 1,
**caractérisé en ce que**
le segment denté (47) présente un rail de guidage (56) sur une surface de recouvrement (55) en direction des éléments latéraux du dispositif d'entraînement (1), qui est relié par une liaison fonctionnelle mobile positive à une glissière de guidage moulée (46) sur un côté extérieur (45) de la glissière (30) qui est tourné vers l'élément de crémaillère (7), et que des épaulements de flancs de filetage (57) sont prévus sur la surface de recouvrement (55) , épaulements qui transforment un mouvement de rotation en un mouvement de translation pour déplacer l'ouvrant (2) dans le sens longitudinal du rail de guidage (10) avec une liaison efficace avec la broche filetée (6).
